# EUROPEAN PATENT APPLICATION

(11) **EP 2 579 198 A1**
(43) Date of publication of application: **10.04.2013**
(21) Application number: 12187391.3
(22) Date of filing: 05.10.2012
(51) Int. Cl.: G06Q 20/02, G06Q 20/08, G06Q 20/12, G06Q 20/38, G06Q 20/42

(54) **Secure payment system**

(30) Priority: 07.10.2011 GB 201117293
(71) Applicant: MGt plc, Kirkcaldy Fife KY2 6QJ (GB)
(72) Inventor: Caulkett, Andrew, Kirkcaldy, Fife KY2 6QJ (GB); Rakshit, Sanjay, Dalgety Bay, Fife KY11 9GD (GB); Lloyd, Chris, KY2 6UD, Fife Kirkcaldy (GB); Baxendale, Craig, Falkland, Fife KY15 7BG (GB)
(74) Representative: Kinsler, Maureen Catherine

(57) **Abstract**

A method for handling secure information using a first application that has a link to a second, separate secure data handling application, the method comprising: presenting to the user using the secure data handling application a secure data entry screen in response to selection of the link in the first application; receiving secure data from the user using the secure data entry screen; and re-directing the user to the first application once the secure data entry is completed.

## Description

### Field of the Invention

The present invention relates to a secure payment system for allowing users to make payments over the internet.

### Background of the Invention

Payment card industry accreditation places responsibilities on software development houses to review all their code that may be in scope for handling payment card details and prove that this is carried out in a secure manner consistent with the payment card industry data security standards (PCI-DSS). This review can prove onerous if there is a significant code base. In addition, modifications to code to be PCI-DSS compliant can be complex and costly in terms of time and engineering resources. Furthermore, the engineers carrying out the development work need to have been trained appropriately to ensure they code to the correct standards.

### Summary of the Invention

In accordance with one aspect of the invention, there is provided a method for handling secure information comprising providing a first application that has a link to a second, separate secure data handling application, the link being selectable as and when secure data is needed from a user; presenting to the user using the secure data handling application a secure data entry screen; receiving secure data from the user using the secure data entry screen; and re-directing the user to the first application once the secure data entry is completed.

The secure data screen collects and validates the card details and transmits them directly to a payment token engine. The payment token engine responds with a token and some other details that the first application can then use to carry out payment processing. At no point does the first application using the secure data screen handle the card's full details. This means that the first application is removed from the scope of the payment card industry accreditation process removing the need for the expensive review and potential upgrade of existing code described above.

As an example, if the first application is a web based application, e.g. a shopping site, then the server side code has to be modified, so that when customer gets to a point where they need to enter card details an initial call is made to a secure payment system, which prepares the secure data screen. The application web browser is then redirected to the URL that hosts the secure data screen supplying parameters, so the correct secure data screen is displayed (there may be many concurrent secure data screens for a multi-user application). Once the user has entered their card details the browser is redirected to the appropriate success or failure URL hosted by the web-based application.

The secure data screen provides an easy cost effective solution for third parties to collect payment card details in a manner consistent with PCI-DSS. Furthermore, by the subsequent use of the payment token engine those third parties can carry out card payment transactions in a manner consistent with PCI-DSS.

According to another aspect of the invention, there is provided a system for handling secure information using a first application that has a link to a second, separate secure data handling application, the system being configured to: present to the user using the secure data handling application a secure data entry screen in response to selection of the link in the first application; receive secure data from the user using the secure data entry screen; and re-direct the user to the first application once the secure data entry is completed.

The system may be adapted to cause the secure data entry screen to be generated using the secure data handling application. The system may be configured to store the secure data entered in a memory associated with the secure data handling application. The secure data may be payment details. The payment details may comprise credit or debit card details, and in particular a unique credit or debit card number.

The system may be configured to validate the secure data. The system may be adapted to arrange for a payment to be made in the event that the secure data is validated.

The second, separate secure data handling application may be provided on a different server or at a different location to the first application.

The secure data handling application may comply with payment card industry data security standards, such as PCI-DSS.

The system may be configered to generate a token once the secure data is received and store the token in association with the secure data. The token may be generated using at least part of the secure information received. The system may be configured to send the token to the first application.

### Brief Description of the Drawings

Various aspects of the invention will now be described by way of example only and with reference to the accompanying drawings, of which:
Figure 1 is a block diagram of an application that is operable to communicate with a separate, secure payment system,
Figure 2 shows the steps taken when a secure payment is to be made using the system of Figure 1;
Figure 3 is a screen shot of a log in page for video on demand web site;
Figure 4 is a screen shot of page of the video on demand web site, with two videos available for user purchase;
Figure 5 is a screen shot of a page of a secure data screen that is accessible via the screen of Figure 4 to allow entry of a user's payment details;
Figure 6 is a view of the page of Figure 5, in which some user details are entered;
Figure 7 is a screen shot of a page of the video on demand web site seeking confirmation from a user that a purchase it to be made;
Figure 8 is a screen shot of a page of the video on demand web site in which a user is asked whether their card details are to be saved;
Figure 9 is a screen shot of a page of the video on demand web site confirming that the purchase has been completed;
Figure 10 is a view of the page of Figure 5, in which some user details are entered for a user for whom card details were securely stored in a previous interaction;
Figure 11 is a screen shot of a page that is presented to an already registered user in the event that they want to make a further purchase;
Figure 12 is a screen shot of the page on Figure 11, in which the user has entered the required information, and
Figure 13 is a screen shot of the purchased video being played.

### Detailed Description of the Drawings

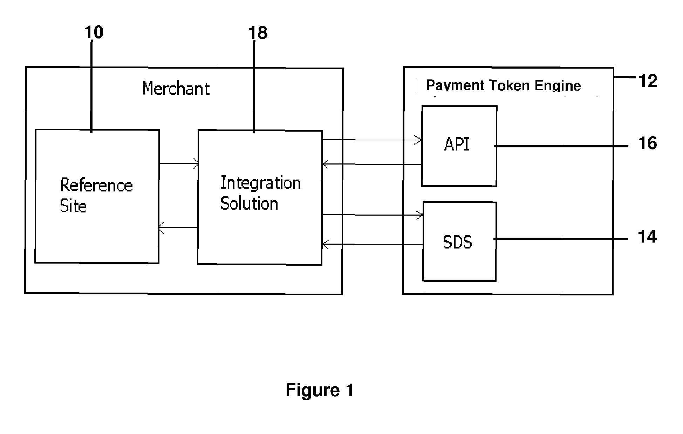

Figure 1 shows a system for allowing secure payments to be made. An application 10 provides services that require the handling of payment card details in a secure manner consistent with PCI-DSS. This will be referred to as the reference application 10. This is typically a merchant application that provides services that require some form of payment. The reference application 10 may be made available via a web server, and be accessible via the internet, or may be a desktop application.

The reference application/application server 10 uses a secure payment system that has a payment token engine 12, which is associated with a payment token engine server (not shown). The payment token engine 12 is able to communicate with a payment token database, in which payment method information is stored with the particularly sensitive data encrypted in accordance with the PCI-DSS. Included in the payment token engine 12 is a secure data screen module 14 for generating a secure data screen and an application programming interface (API) 16 for enabling communication with the external reference application 10. For the purposes of this description, it will be assumed that connections between the reference application 10 and the payment token engine server are over the internet. However, it will be appreciated that other communications networks could be used.

A merchant must be first registered to use the secure payment system. Once registered, the merchant receives authentication details for the secure payment system. The merchant's reference application 10 is linked to an integration interface 18 that has code or instructions to make call to the secure payment system, and in particular to the API 16 in the payment token engine 12, as and when a payment is to be made via the reference application 10. When this is activated a correctly formatted XML message is passed to the payment token engine API 16.

When the reference application 10 is registering with the secure payment system, it supplies the following parameters via an API 16 call: the types of cards to accept (credit cards, debit cards, continuous authority cards), a unique session identifier (generated by the reference site), the number of attempts to allow a customer to enter valid card details, a random password that will be used to create a digest, a merchant identifier and finally a URL to which the browser should be redirected on success and a URL to which the browser should be redirected for failure. Additional parameters are provided to authenticate the reference application 10, such as username and password. An instance of the secure data screen is then prepared with validation rules appropriate to the types of payment cards to accept and branding appropriate for the merchant. A unique process identifier for the nascent secure data screen is supplied in the response from the payment token engine 12 to the reference application 10. As and when payment details need to be collected by the reference application 10, a call is made to the secure payment system and the secure data screen is presented to the customer to enter the payment details. This will be described in more detail later.

Once the merchant's site and the reference application 10 are registered and integrated, then when a payment is to be made, the reference application 10 renders the web page at the URL hosted by the payment token engine 12 and passes over the unique session details. The payment token engine 12 uses the reference application 10 identifiers to launch the correct secure data screen using the secure data screen module 14. For a browser hosted application, *e.g.* website, this redirects the user's browser to the URL hosted by the payment token engine 12. In non-browser based applications, the application uses an embedded window that can render and respond to HTML (referred to generally here as "browser"). The browser renders the simple HTML and cascading style sheets (a markup language used in the construction of web pages) page and results in the user being presented with the secure data screen on their screen.

To the user, the secure payment screen is presented in a transparent manner, as if it were part of the reference application 10, but in practice, the user's browser has been re-directed to the external secure payment system, that is not part of the reference application 10 (although typically it is styled in such a way to make it appear part of the reference application), where any financial transaction is handled and all financial information is stored. The user then communicates directly with the payment token engine 12 over a secure https protocol network connection (LAN or WAN). Once the card details are collected they are validated, using conventional processes. The outcome of the validation process is communicated to the reference site as either a success or failure. In the event that card details are successfully validated, a token is generated representing the card data stored in the payment token engine 12. This token is stored in the payment token database. The use of the secure data screen, a payment token and the third party storage of the card details, means that the customer's full card details are at no point during the process exposed to the Merchant thus eliminating the need for the Merchant to be PCI-DSS compliant.

Depending on the outcome of the validation process, success and failure screens are presented to the user. These are at URLs hosted by the reference application 10 that is using the secure data screen, and not by the payment token engine 12. Typically, the resource hosted at the failure URL will display an appropriate message to the user, whilst the success URL will parse parameters, such as the payment token from the URL and carry out any business process that should now happen, *e.g.* requesting the payment token engine 12 to collect a payment from the card represented by the returned token (this is done through another XML API) and/or store the token against the user's details for future use.

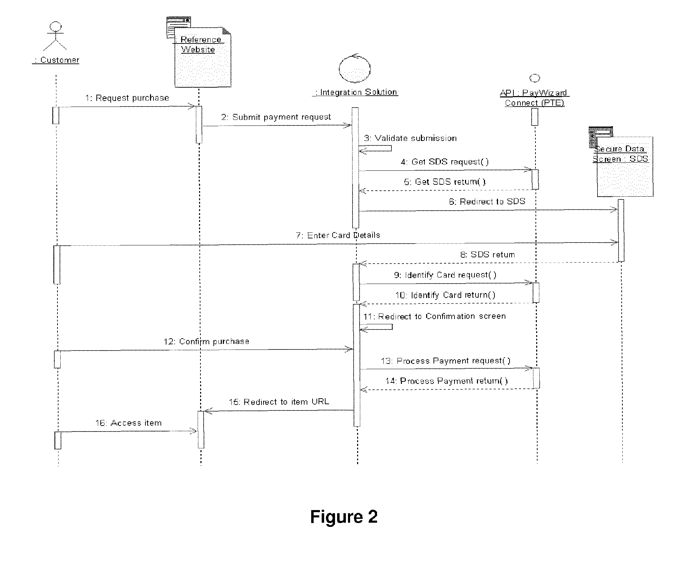

Figure 2 show the steps taken in a typical payment process. The customer requests to purchase an item on the reference site. The reference site submits a payment request to the integration interface 18. This submission includes details such as the amount to be charged, the currency, etc. The integration interface 18 validates the submission from the reference site, ensuring all the necessary data has been passed before continuing. The integration interface 18 makes a call to the secure payment system API 16 and is returned a process ID, which is required by the secure data module to setup the secure data screen. The integration interface 18 redirects the customer's browser to the secure data screen, using the Process ID. The customer enters their card details on the secure data screen and selects "Continue". The secure data screen carries out local validation of the card details provided: for example does it pass a Luhn check?, is it of the types of card specified when the reference application 10 originally called the secure data screen? If the card data provided meets these criteria then it is transmitted securely to the payment token engine 12 over a https connection. The payment token engine 12 encrypts the sensitive data (card number) and stores this along with other card data supplied (excluding CSC) in its payment token engine 12 database. In addition, the payment token engine 12 generates a payment token, which is also stored in the payment token engine database with the card data.

Once the sensitive information is captured and stored, the secure data screen redirects back to the integration interface 18, passing back a newly created payment token, truncated PAN, card holder's name, start date, expiry date, issue number, card security code and submitter reference. The secure data screen has now completed its work, card details have been captured, encrypted and a token representative of those details returned to the reference application 10. The integration interface 18 can now ask the customer to confirm their purchase, so that payment can be taken. If the customer selects "confirm" on the confirmation screen, the integration interface 18 makes a Process Payment call to the secure payment system API 16, using the newly created payment token and other data, to charge the customer's card. The integration interface 18 redirects to either the success page (success URL) or to an error page (failure URL) depending on the result of the Process Payment call, passing back various parameters to the reference site. After a successful transaction, the other business processes take place, which for on-line digital media is commencement of streaming the content

In the process of Figure 2, the token (which represents the card data stored in the payment token engine 12) and other data including the amount to be charged to the card is passed from the secure data screen via the secure communication channel to the payment token engine 12 to collect the money from the relevant credit card: the sensitive card information never needs to be shared and the customer's payment card data remains secure. The reference application 10 can store the data pertinent to the card returned by the payment token engine 12 (token, truncated card number, issue number, start date, expiry date, customer name, CSC) if required to fulfil business rules but this data is not considered to be sensitive by the PCI-DSS. However, other rules recommend that the CSC should never be stored.

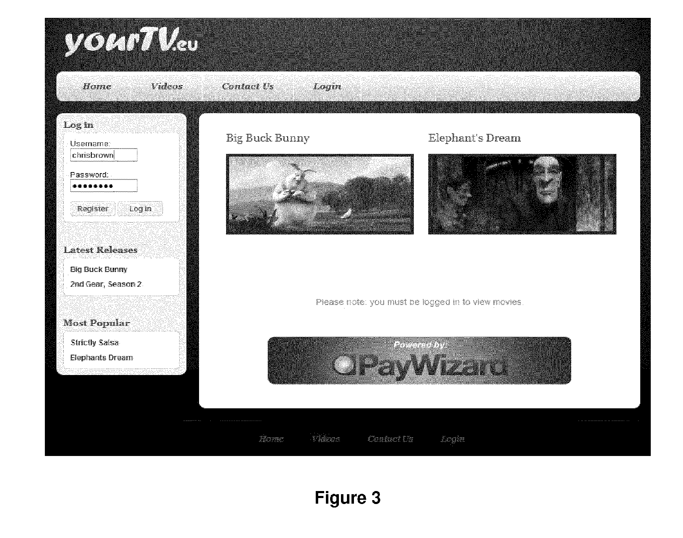

In practice, there are two different purchasing scenarios. Firstly, one in which the customer purchases services from a reference site and enters card details via the secure data screen, and secondly where the customer purchases services from the reference site using stored card details. These two scenarios will be illustrated with reference to Figures 3 to 13.

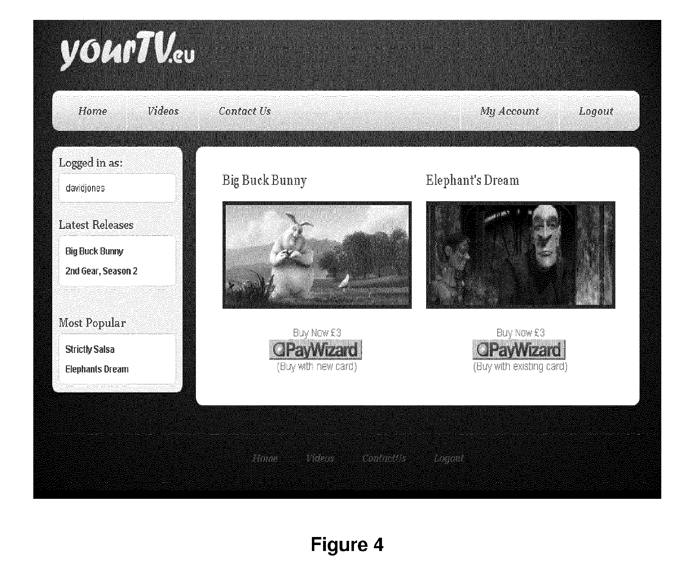

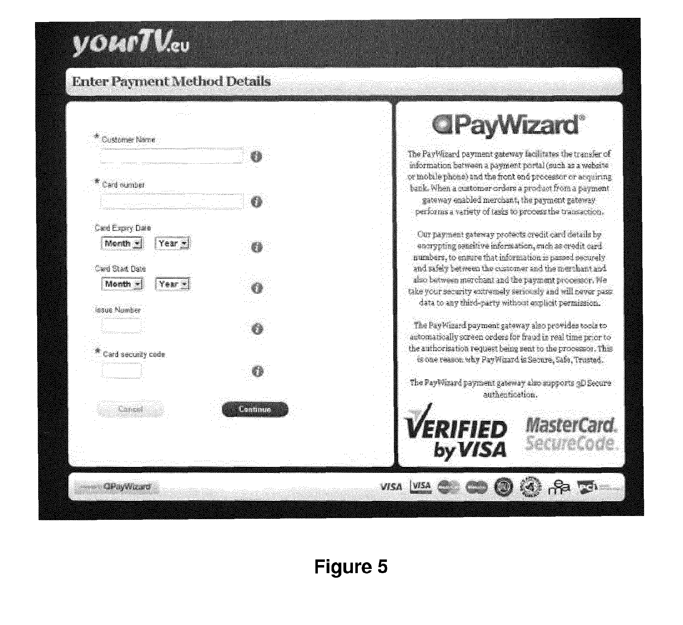

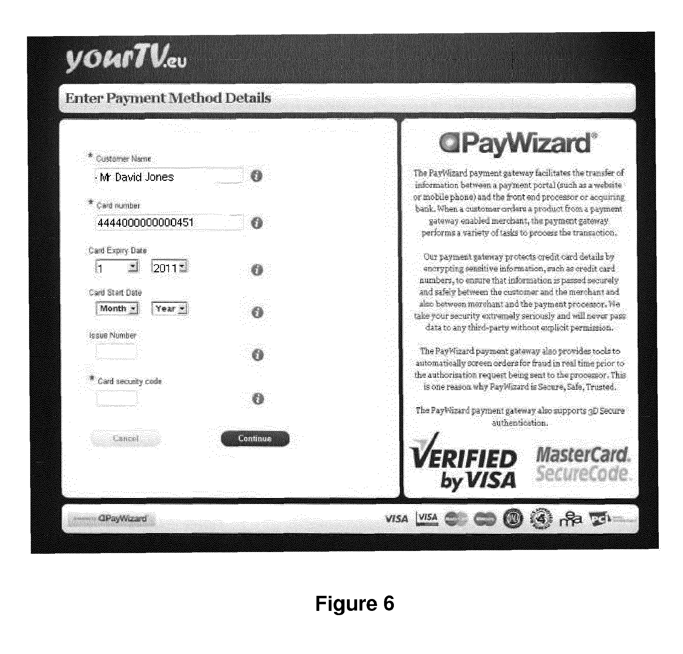

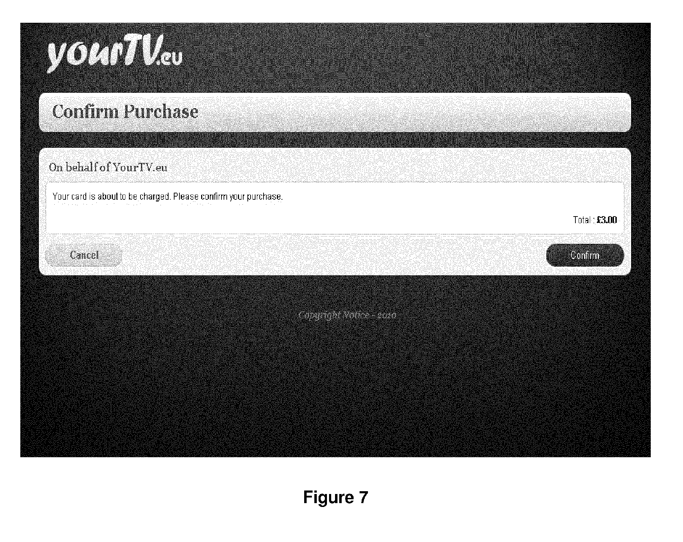

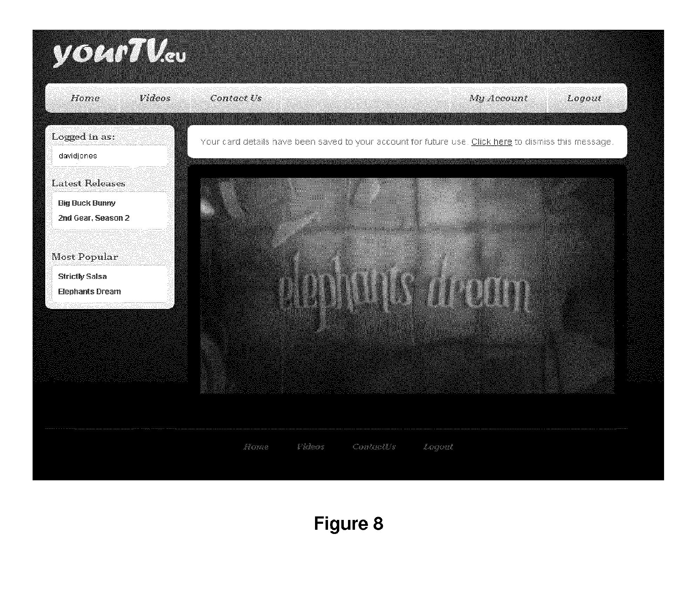

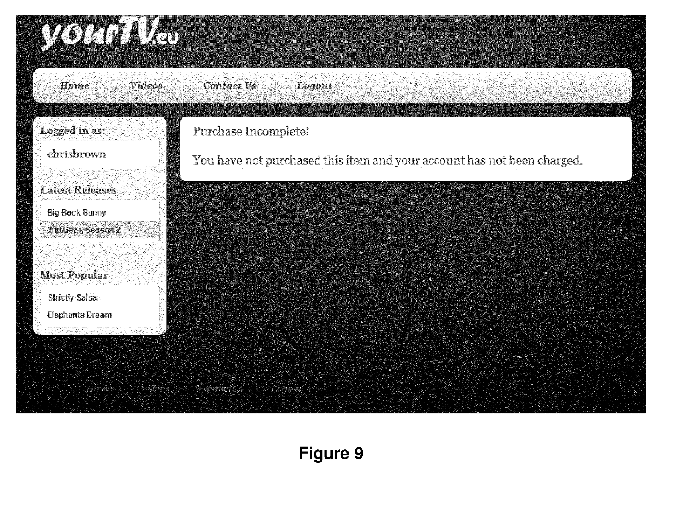

When a customer wishes to purchase services from a merchant for the first time, he logs in to the merchant site, for example a video on demand site as shown in Figure 3. Once logged in, the customer can elect to make a purchase, for example as shown in Figure 4 "Elephant's Dream" and selects the PayWizard button, which initiates the secure payment process. The customer is then presented with the secure data screen, as shown in Figure 5. The customer enters their payment card details, as shown in Figure 6, and selects "continue". The customer is then presented with the confirmation screen, see Figure 7. If they wish to proceed, the customer selects "confirm". A screen is then presented to the user asking if they want their card details saved, as shown in Figure 8. If the user agrees to this, the token that represents their card details is stored by the merchant. Then, a screen is presented confirming payment, as shown in Figure 9, and the customer can watch the purchased video. If the customer selects "cancel" on either the secure data screen or confirmation screen, then they are redirected to a defined failure page and no payment is taken.

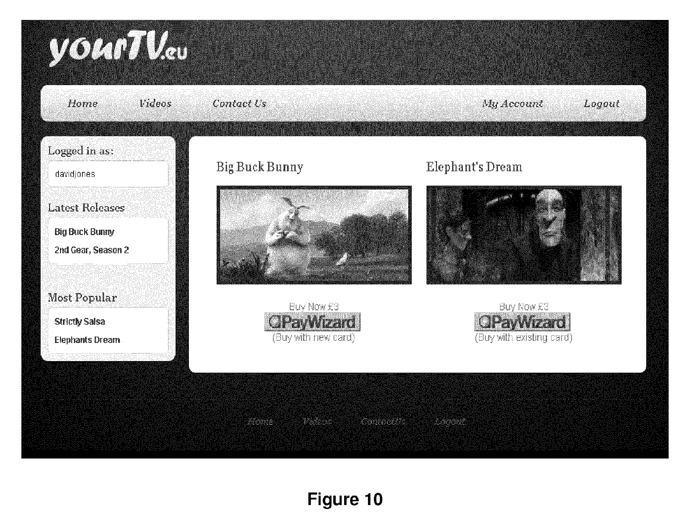

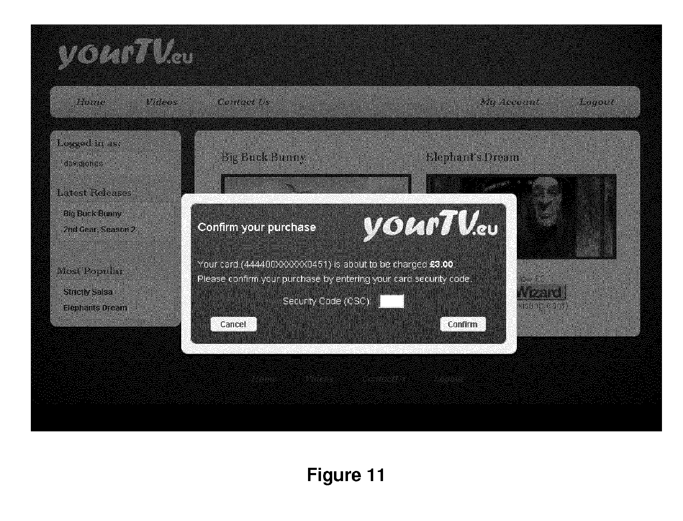

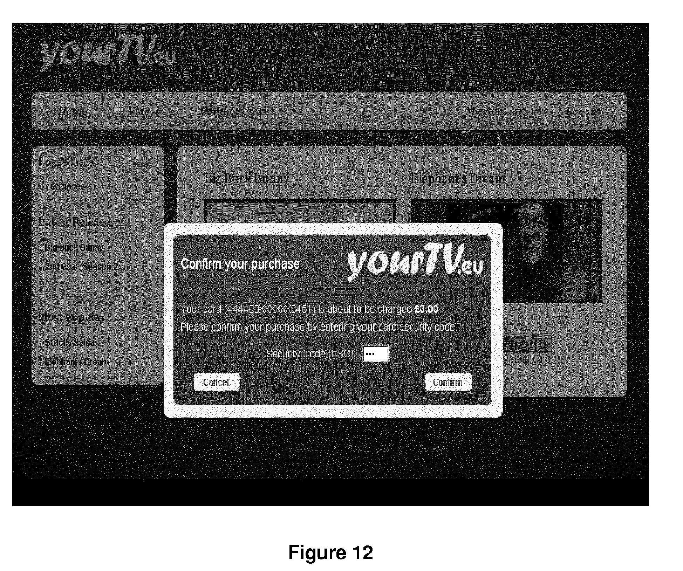

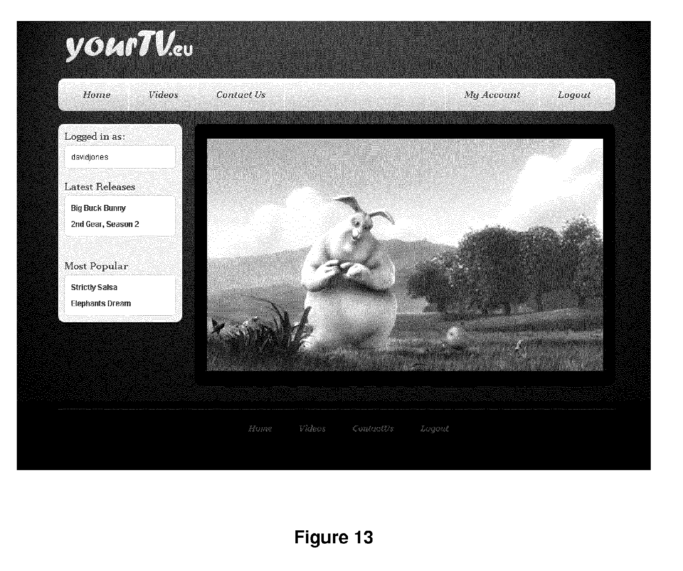

If a user has elected to have his card details stored, the process for subsequent purchases in simplified. The process starts as before, as shown in Figure 10, except that on log in, the merchant site recognises the user and the fact that the user's card details are stored. Once logged in, if the customer elects to purchase, for example, "Big Buck Bunny", he selects the PayWizard button. In this case, rather than requesting the user's card details via the secure data screen, a confirm purchase screen is presented, as shown in Figure 11. This requires a restricted amount of data, in this case the CSC number of the user's stored card. Once this information is entered, as shown in Figure 12, the customer is able to watch the selected video, as shown in Figure 13, and the payment can be completed.

As will be appreciated by one of ordinary skill in the art, the present invention may be embodied as an apparatus (including, for example, a system, machine, device, computer program product, and/or the like), as a method (including, for example, a business process, computer-implemented process, and/or the like), or as any combination of the foregoing. Embodiments of the present invention are described above with reference to flowchart illustrations and a block diagram. It will be understood that blocks of the flowchart illustrations and/or block diagram, and/or combinations of blocks in the flowchart illustrations and/or block diagram, can be implemented by computer-executable program instructions (i.e., computer-executable program code). These computer-executable program instructions may be provided to a processor of a general purpose computer, special purpose computer, or other programmable data processing apparatus to produce a particular machine, such that the instructions, which execute via the processor of the computer or other programmable data processing apparatus, create a mechanism for implementing the functions/acts specified in the flowchart and/or block diagram block or blocks. As used herein, a processor may be "configured to" perform a certain function in a variety of ways, including, for example, by having one or more general-purpose circuits perform the function by executing one or more computer-executable program instructions embodied in a computer-readable medium, and/or by having one or more application-specific circuits perform the function.

These computer-executable program instructions may be stored or embodied in a computer-readable medium to form a computer program product that can direct a computer or other programmable data processing apparatus to function in a particular manner, such that the instructions stored in the computer readable memory produce an article of manufacture including instructions which implement the function/act specified in the flowchart and/or block diagram block(s).

Any combination of one or more computer-readable media/medium may be utilized. In the context of this document, a computer-readable storage medium may be any medium that can contain or store data, such as a program for use by or in connection with an instruction execution system, apparatus, or device. The computer-readable medium may be a transitory computer-readable medium or a non-transitory computer-readable medium.

A transitory computer-readable medium may be, for example, but not limited to, a propagation signal capable of carrying or otherwise communicating data, such as computer-executable program instructions. For example, a transitory computer-readable medium may include a propagated data signal with computer-executable program instructions embodied therein, for example, in base band or as part of a carrier wave. Such a propagated signal may take any of a variety of forms, including, but not limited to, electro-magnetic, optical, or any suitable combination thereof. A transitory computer-readable medium may be any computer-readable medium that can contain, store, communicate, propagate, or transport program code for use by or in connection with an instruction execution system, apparatus, or device. Program code embodied in a transitory computer-readable medium may be transmitted using any appropriate medium, including but not limited to wireless, wireline, optical fiber cable, radio frequency (RF), etc.

A non-transitory computer-readable medium may be, for example, but not limited to, a tangible electronic, magnetic, optical, electromagnetic, infrared, or semiconductor storage system, apparatus, device, or any suitable combination of the foregoing. More specific examples (a non-exhaustive list) of the non-transitory computer-readable medium would include, but is not limited to, the following: an electrical device having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

Whilst the specific embodiment describes the invention with reference to html, it will also be understood that one or more computer-executable program instructions for carrying out operations of the present invention may include object-oriented, scripted, and/or unscripted programming languages, such as, for example, Java, Perl, Smalltalk, C++, SAS, SQL, Python, Objective C, and/or the like. In some embodiments, the one or more computer-executable program instructions for carrying out operations of embodiments of the present invention are written in conventional procedural programming languages, such as the "C" programming languages and/or similar programming languages. The computer program instructions may alternatively or additionally be written in one or more multi-paradigm programming languages, such as, for example, F#.

The computer-executable program instructions may also be loaded onto a computer or other programmable data processing apparatus to cause a series of operation area steps to be performed on the computer or other programmable apparatus to produce a computer-implemented process such that the instructions which execute on the computer or other programmable apparatus provide steps for implementing the functions/acts specified in the flowchart and/or block diagram block(s). Alternatively, computer program implemented steps or acts may be combined with operator or human implemented steps or acts in order to carry out an embodiment of the invention.

Embodiments of the present invention may take the form of an entirely hardware embodiment, an entirely software embodiment (including firmware, resident software, micro-code, etc.), or an embodiment combining software and hardware aspects that may generally be referred to herein as a "module," "application," or "system."

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations, combinations, and modifications of the just described embodiments can be configured without departing from the scope and spirit of the invention. Therefore, it is to be understood that, within the scope of the appended claims, the invention may be practiced other than as specifically described herein.

A skilled person will appreciate that variations of the disclosed arrangements are possible without departing from the invention. For example, although the secure data screen in the embodiments described is used to collect card details in a secure manner without possible interference from a potentially unsecure application, it could equally be used to collect any sensitive data and transmit this data to a secure store without the possible intervention of the application using the technology. For example, the secure data screen could be used to capture bank account details for direct debit processing. Accordingly, the above description of the specific embodiment is made by way of example only and not for the purposes of limitation. It will be clear to the skilled person that minor modifications may be made without significant changes to the operation described.

## Claims

1. A method for handling secure information using a first application that has a link to a second, separate secure data handling application, the method comprising:
presenting to the user using the secure data handling application a secure data entry screen in response to selection of the link in the first application;
receiving secure data from the user using the secure data entry screen; and
re-directing the user to the first application once the secure data entry is completed.

2. A method as claimed in claim 1 comprising generating the secure data entry screen using the secure data handling application.

3. A method as claimed in claim 1 or claim 2 comprising storing the secure data entered in a memory associated with the secure data handling application.

4. A method as claimed in any of the preceding claims, wherein the secure data is payment details.

5. A method as claimed in claim 4 wherein the payment details comprise credit or debit card details, and in particular a unique credit or debit card number.

6. A method as claimed in claim 4 or claim 5 comprising validating the payment details.

7. A method as claimed in claim 6 comprising arranging for a payment to be made in the event that the payment details are validated.

8. A method as claimed in any of the preceding claims, wherein the second, separate secure data handling application is provided on a different server or at a different location to the first application.

9. A method as claimed in any of the preceding claims, wherein the secure data handling application complies with payment card industry data security standards, such as PCI-DSS.

10. A method as claimed in any of the preceding claims comprising generating a token once the secure information is received and storing the token in association with the secure information.

11. A method as claimed in claim 10 wherein the token is generated using at least part of the secure information received.

12. A method as claimed in claim 10 or claim 11 comprising sending the token to the first application.

13. A system for handling secure information using a first application that has a link to a second, separate secure data handling application, the system being configured to implement the method of any of the preceding claims.

14. A computer program, preferably on a data carrier or computer readable medium, having code or instructions for implementing the method of any of claims 1 to 12.
